# EUROPEAN PATENT APPLICATION

(11) **EP 3 862 885 A1**
(43) Date of publication of application: **11.08.2021**
(21) Application number: 19876096.9
(22) Date of filing: 15.10.2019
(51) Int. Cl.: G06F 12/02

(54) **RESOURCE MANAGEMENT METHOD AND APPARATUS**

(30) Priority: 26.10.2018 CN 201811255735
(71) Applicant: Huawei Technologies Co., Ltd., Shenzhen, Guangdong 518129 (CN)
(72) Inventor: GUAN, Junxiong, Shenzhen, Guangdong 518129 (CN)
(74) Representative: Körber, Martin Hans
(86) International application number: PCT/CN2019/111136
(87) International publication number: WO 2020/083067

(57) **Abstract**

A resource management method is disclosed, including: receiving, by a first device, a request message sent by a second device, where the request message is used to indicate the first device to allocate a memory to the second device, the request message carries a requested memory size, and the first device and the second device communicate with each other based on a network protocol; dividing, by the first device, a memory space from a memory of the first device based on the requested memory size carried in the request message; generating, by the first device, a virtual disk based on the memory space; and providing, by the first device, the virtual disk for the second device as a memory of the second device. The method can improve resource utilization and an access rate of the device.

## Description

### TECHNICAL FIELD

This application relates to the storage field, and more specifically, to a resource management method and apparatus.

### BACKGROUND

Currently, a plurality of devices in a computer system usually communicate with each other based on a network protocol.

Each device in the plurality of devices has a different configuration and a different data access frequency. A device with a high data access frequency or a device configured with comparatively small memory space may have insufficient memory space for use. As a result, performance of the device is affected. In the prior art, access performance of a device is usually ensured by adding a memory module to the device. However, adding the memory module increases device costs, and requires manual replacement.

### SUMMARY

Embodiments of this application provide a resource management method, to improve resource utilization and an access rate of a device.

According to a first aspect, a resource management method is provided, including: receiving, by a first device, a request message sent by a second device, where the request message is used to indicate the first device to allocate a memory to the second device, the request message carries a requested memory size, and the first device and the second device communicate with each other based on a network protocol; dividing, by the first device, a memory area from a memory of the first device based on the requested memory size carried in the request message; generating, by the first device, a virtual disk based on the memory area; and providing, by the first device, the virtual disk for the second device as a memory of the second device.

Optionally, any two devices communicate with each other based on an NVMe over fabric protocol. The fabric protocol may include a fiber channel (fiber channel, FC) protocol, a transmission control protocol/an internet protocol (transmission control protocol/internet protocol, TCP/IP), a remote direct memory access-based ethernet (RDMA over converged ethernet, RoCE) protocol, or a radio bandwidth (infiniband, IB) protocol.

In this embodiment of this application, when the second device requests the first device to allocate the memory to the second device, the first device divides a part of memory area in the memory of the first device, generates the virtual disk based on the part of memory area, and finally provides the generated virtual disk for the second device as the memory of the second device. Therefore, the second device can use the memory allocated by the first device to the second device, to improve resource utilization and an access rate of the device.

In a possible implementation, the generating a virtual disk based on the memory area includes: simulating, by the first device, the memory area as disk space; and generating, by the first device, the virtual disk based on the disk space.

In this embodiment of this application, the first device first simulates the divided memory area as a disk area, then generates the virtual disk based on the part of disk space, and further provides the generated virtual disk for the second device as the memory of the second device.

In a possible implementation, the providing, by the first device, the virtual disk for the first device as a memory of the first device includes: receiving, by the first device, a disk query command sent by the second device; and reporting, by the first device, the virtual disk to the first device as the memory of the first device.

In this embodiment of this application, after generating the virtual disk, the first device mounts the virtual disk to the second device. After receiving the disk query command sent by the second device, the first device reports related information of the virtual disk to the second device, so that the second device can map the virtual disk to the virtual memory of the second device based on the related information that is of the virtual disk and that is reported by the first device.

Optionally, the related information that is of the virtual disk and that is reported by the first device to the second device may include an identifier of the virtual disk and a size of virtual disk space.

In a possible implementation, the method further includes:
receiving, by the first device, a disk type query command sent by the second device, where the disk type query command is used to query a type of a storage device that generates the virtual disk; and sending, by the first device, indication information to the second device, where the indication information indicates that the virtual disk is generated based on the memory area.

In this embodiment of this application, before the second device maps the virtual disk to the virtual memory of the second device, the second device further needs to determine the type of the storage device that generates the virtual disk. In other words, the second device determines whether the virtual disk is generated based on the memory area in the first device. The second device sends the disk type query command to the first device. The disk type query command is used to query the first device, the type of the storage device that generates the virtual disk. The first device sends the indication information to the second device according to the disk type query command. The indication information is used to indicate to the second device that the virtual disk is generated based on the memory area in the first device.

In a possible implementation, the method further includes: receiving, by the first device, a virtual disk access request sent by the second device, where the virtual disk access request includes the identifier of the virtual disk; and gaining access to, by the first device according to the virtual disk access request, the memory area that is used to generate the virtual disk.

In this embodiment of this application, when a service in the second device generates a memory access request, the second device determines whether a memory address carried in the memory access request falls within an address range provided by the virtual memory. If the memory address carried in the memory access request falls within the address range provided by the virtual memory, the second device needs to convert the memory address into a logical address that of the virtual disk and that corresponds to the memory address, further, convert the memory access request into the virtual disk access request that carries both the logical address that is of the virtual disk and that corresponds to the memory address and the identifier of the virtual disk, and send the virtual disk access request to the first device.

It can be learned that when the memory address carried in the memory access request generated by the second device falls within the address range of the virtual memory, that the service in the second device gains access to the virtual memory of the second device is actually gaining access to the memory area that is allocated by the first device to the second device.

According to a second aspect, a resource management method is provided, including: sending, by a second device, a request message to a first device, where the request message is used to indicate the first device to allocate a memory to the second device, the request message carries a requested memory size, and the first device and the second device communicate with each other based on a network protocol; receiving, by the second device, a virtual disk reported by the first device, where the virtual disk is generated based on a memory area in the first device; and mapping, by the second device, the virtual disk to a virtual memory of the second device.

In this embodiment of this application, when the second device requests the first device to allocate the memory to the second device, the first device divides a part of memory area in the memory of the first device, generates the virtual disk based on the part of memory area, and finally provides the generated virtual disk for the second device as the memory of the second device. Therefore, the second device can use the memory allocated by the first device to the second device, to improve resource utilization and an access rate of the device.

In a possible implementation, the method further includes: sending, by the second device, a disk query command to the first device, where the disk query command indicates the first device to report the virtual disk.

In this embodiment of this application, after generating the virtual disk, the first device mounts the virtual disk to the second device. After receiving the disk query command sent by the second device, the first device reports related information of the virtual disk to the second device, so that the second device can map the virtual disk to the virtual memory of the second device based on the related information that is of the virtual disk and that is reported by the first device.

Optionally, the related information that is of the virtual disk and that is reported by the first device to the second device may include an identifier of the virtual disk and a size of virtual disk space.

In a possible implementation, the method further includes: sending, by the second device, a disk type query command to the first device, where the disk type query command is used to query a type of a storage device that generates the virtual disk; receiving, by the second device, indication information sent by the first device, where the indication information is used to indicate that the virtual disk is generated based on the memory area; and mapping, by the second device, the virtual disk to the virtual memory of the second device after receiving the indication information.

In this embodiment of this application, before the second device maps the virtual disk to the virtual memory of the second device, the second device further needs to determine the type of the storage device that generates the virtual disk. In other words, the second device determines whether the virtual disk is generated based on the memory area in the first device. The second device sends the disk type query command to the first device. The disk type query command is used to query the first device, the type of the storage device that generates the virtual disk. The first device sends the indication information to the second device according to the disk type query command. The indication information is used to indicate to the second device that the virtual disk is generated based on the memory area in the first device.

In a possible implementation, the method further includes: generating, by the second device, a memory access request; when a memory address carried in the memory access request falls within an address range provided by the virtual memory, determining, by the second device, a logical address that is of the virtual disk and that corresponds to the memory address; converting, by the second device, the memory access request into the virtual disk access request, where the virtual disk access request includes the identifier of the virtual disk; and sending, by the second device, the virtual disk access request to the first device.

In this embodiment of this application, when a service in the second device generates the memory access request, the second device determines whether the memory address carried in the memory access request falls within the address range provided by the virtual memory. If the memory address carried in the memory access request falls within the address range provided by the virtual memory, the second device needs to convert the memory address into a logical address that of the virtual disk and that corresponds to the memory address, further, convert the memory access request into the virtual disk access request that carries both the logical address that is of the virtual disk and that corresponds to the memory address and the identifier of the virtual disk, and send the virtual disk access request to the first device.

It can be learned that when the memory address carried in the memory access request generated by the second device falls within the address range of the virtual memory, that the service in the second device gains access to the virtual memory of the second device is actually gaining access to the memory area that is allocated by the first device to the second device.

According to a third aspect, a resource management apparatus is provided. The apparatus is configured to perform the method in any one of the first aspect or the possible implementations of the first aspect. Specifically, the apparatus may include units configured to perform the resource management method in any one of the first aspect or the possible implementations of the first aspect.

According to a fourth aspect, a resource management apparatus is provided. The apparatus is configured to perform the method in any one of the second aspect or the possible implementations of the second aspect. Specifically, the apparatus may include units configured to perform the resource management method in any one of the second aspect or the possible implementations of the second aspect.

According to a fifth aspect, a resource management device is provided. The device includes a memory and a processor. The memory is configured to store an instruction. The processor executes the instruction stored in the memory, so that the device performs the resource management method in any one of the first aspect or the possible implementations of the first aspect.

According to a sixth aspect, a computing device is provided. The device includes a memory and a processor. The memory is configured to store an instruction. The processor executes the instruction stored in the memory, so that the device performs the resource management method in any one of the second aspect or the possible implementations of the second aspect.

According to a seventh aspect, a computer-readable storage medium is provided. The computer-readable storage medium stores an instruction. When the instruction is run on a computer, the computer is enabled to perform the resource management method in any one of the first aspect or the possible implementations of the first aspect.

According to an eighth aspect, a computer-readable storage medium is provided. The computer-readable storage medium stores an instruction. When the instruction is run on a computer, the computer is enabled to perform the resource management method in any one of the second aspect or the possible implementations of the second aspect.

According to a ninth aspect, a computer program product including an instruction is provided. When the instruction is run on a computer, the computer is enabled to perform the resource management method in any one of the first aspect or the possible implementations of the first aspect.

According to a tenth aspect, a computer program product including an instruction is provided. When the instruction is run on a computer, the computer is enabled to perform the resource management method in any one of the second aspect or the possible implementations of the second aspect.

Based on the implementations provided in the foregoing aspects, this application may further combine the implementations to provide more implementations.

### BRIEF DESCRIPTION OF DRAWINGS

FIG. 1 is a schematic diagram of an architecture of a computer system 100 according to this application;
FIG. 2 is a schematic flowchart of a resource management method 200 according to this application.
FIG. 3 is a schematic flowchart of a data access method 300 according to this application.
FIG. 4 is a schematic diagram of a structure of an apparatus 400 according to this application;
FIG. 5 is a schematic diagram of a structure of an apparatus 500 according to this application; and
FIG. 6 is a schematic diagram of a structure of a device 600 according to this application.

### DESCRIPTION OF EMBODIMENTS

The following describes technical solutions in the embodiments of this application with reference to accompanying drawings.

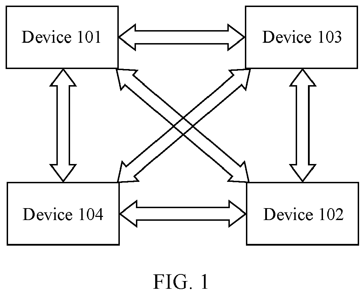

For ease of understanding, an architecture of a computer system to which an embodiment of this application is applicable is first described with reference to FIG. 1. The computer system 100 shown in FIG. 1 includes at least two devices (for example, a device 101, a device 102, a device 103, and a device 104). Any two devices communicate with each other based on a network protocol.

As an example rather than a limitation, any two devices communicate with each other based on an NVMe over fabric protocol. The fabric protocol may include a fiber channel (fiber channel, FC) protocol, a transmission control protocol/an internet protocol (transmission control protocol/internet protocol, TCP/IP), a remote direct memory access-based ethernet (RDMA over converged ethernet, RoCE) protocol, or a radio bandwidth (infiniband, IB) protocol.

A memory is configured in each of the device 101, the device 102, the device 103, and the device 104. Each device may perform data access on a memory configured in the device.

The embodiments of this application provide a resource management method. In a computer system, a device having a rich memory resource divides a part of memory area in a memory of the device, generates a virtual disk based on the part of the memory area, and finally provide the generated virtual disk for a device having a comparatively poor memory resource as a memory of the device. Therefore, the device having the comparatively poor memory resource can use the memory allocated by the device having the rich memory resource to the device having the comparatively poor memory resource, to improve resource utilization and an access rate of the device.

It should be noted that the device in FIG. 1 may be a server or a controller during a specific implementation. The computer system 100 may be a distributed system during a specific implementation. The distributed system may be a distributed computing system or a distributed file system. A distributed storage system may alternatively be a distributed file storage system, a distributed block storage system, or the like.

The following describes, by using an example in which the device 101 in the computer system 100 shares a resource with the device 102 for use, the resource management method provided in the embodiments of this application.

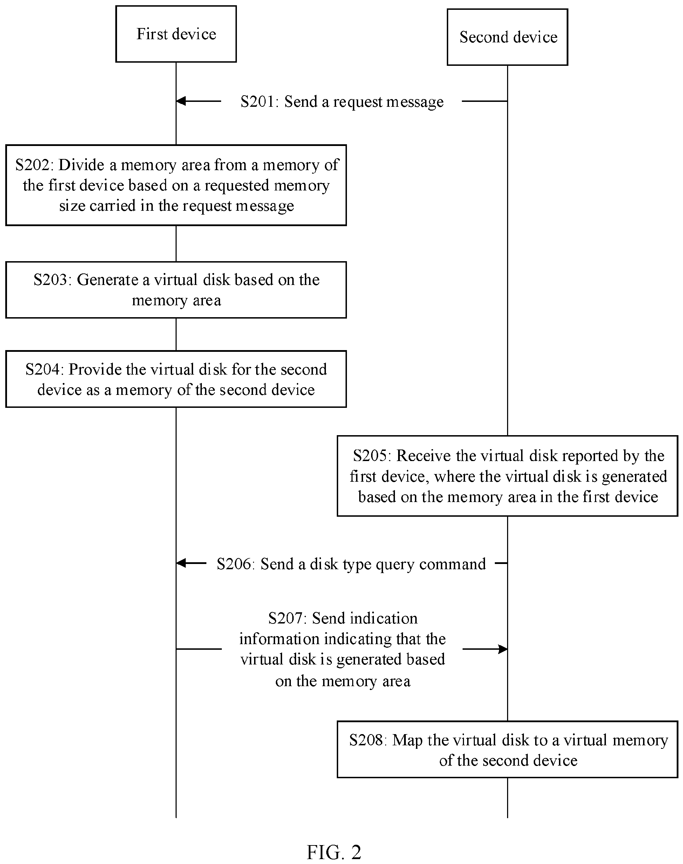

FIG. 2 is a schematic flowchart of a resource management method 200 according to an embodiment of this application. The method 200 includes at least the following steps.

S201: A second device sends a request message to a first device, where the request message is used to indicate the first device to allocate a memory to the second device, the request message carries a requested memory size, and the first device and the second device communicate with each other based on a network protocol. Correspondingly, the first device receives the request message sent by the second device.

Specifically, the device 102 (for example, the second device) sends the request message to the device 101 (for example, the first device). The request message is used to request the device 101 to allocate the memory to the device 101, and the request message carries the memory size requested by the device 102.

For example, when a memory of the device 102 is insufficient, the device 102 sends the request message to the device 101. The memory size that is requested by the device 102 and that is carried in the request message is 100 Mbytes (megabyte).

It should be noted that when the device 102 needs another device in the computer system 100 to allocate a memory for the device 102, the device 102 may further broadcast the request message to all other devices in the computer system 100, so that each device in the computer system 100 can receive the request message sent by the device 102. A device that receives the request message may determine, based on memory usage of the device, whether to allocate the memory to the device 102.

It should be noted that the request message is generated based on an NVMe protocol. The generated request message is encapsulated, based on the network communication protocol between the first device and the second device, into a request message that can be transmitted in the network communication protocol.

S202: The first device (the device 101) divides a memory area from a memory of the first device (the device 101) based on the requested memory size carried in the request message.

Specifically, after receiving the request message sent by the device 102, the device 101 first decapsulates the request message into the NVMe protocol-based request message. The device 101 divides, from the memory of the device 101 based on the allocated memory size that is requested by the device 102 and that is carried in the decapsulated request message, the memory area that meets the memory size carried in the request message, for the device 102.

For example, the allocated memory size that is requested by the device 102 and that is carried in the request message is 100 Mbytes. After receiving the request message, the device 101 divides, the memory area whose address range is from #30 bytes to #1048604 bytes, from the memory of the device 101. The memory area whose address is byte #30 to byte #1048604 is the memory area allocated by the device 101 to the device 102.

S203: The first device (the device 101) generates a virtual disk based on the memory area.

Specifically, after dividing the memory area from the memory of the device 101 for the device 102, the device 101 generates the virtual disk based on the part of the memory area, and provides the virtual disk for the device 102 as the memory of the device 102.

For example, when generating the virtual disk, the device 101 first simulates, by using a virtual memory disk (Ramdisk) technology, the memory area that allocated to the device 102 as disk space, and then constructs the disk space as the virtual disk to which an external device can gain access, for example, name space (Namespace).

S204: The first device (the device 101) provides the virtual disk for the second device (the device 102) as the memory of the second device (the device 102).

Specifically, after generating the virtual disk, the device 101 mounts the virtual disk to the device 120. A specific mounting process is that the device 101 receives a disk query command sent by the device 102. The disk query command is used to indicate the device 101 to report, to the device 102, the virtual disk allocated to the device 102.

The device 101 receives the disk query command sent by the device 102, and reports, to the device 102, according to the disk query command, information (for example, an identifier of the virtual disk and a space size of the virtual disk) about the virtual disk allocated to the device 102.

S205: The second device (the device 102) receives the virtual disk reported by the first device (the device 101), where the virtual disk is generated based on the memory area in the first device (the device 101).

S206: The second device (the device 102) sends a disk type query command to the first device (the device 101), where the disk type query command is used to query a type of a storage device that generates the virtual disk.

Specifically, before the device 102 maps the virtual disk allocated by the device 101, to the virtual memory of the device 102, the device 102 needs to determine the type of the storage device that generates the virtual disk. The device 102 may send the disk type query command to the device 101. The disk type query command is used to query the device 101 whether the virtual disk is generated based on the memory area.

S207: After receiving the disk type query command reported by the second device (the device 102), if determining that the virtual disk is generated based on the memory area, the first device (the device 101) returns indication information indicating that the virtual disk is generated based on the memory area.

Specifically, the device 101 receives the disk type query command sent by the device 102, and determines, according to the disk type query command, whether the virtual disk is generated based on the memory area. If the device 101 determines that the virtual disk is generated based on the memory area, the device 101 generates the indication information, and sends the indication information to the device 102. The indication information is used to indicate that the virtual disk allocated by the device 101 to the device 102 is generated based on the memory area.

For example, the indication information may carry an identifier. The identifier may be carried in one bit, to indicate the type of the storage device that generates the virtual disk. When a value of the bit that carries the identifier is 0, it indicates that the virtual disk is generated based on the memory area, or when a value of the bit that carries the identifier is 1, it indicates that the virtual disk is not generated based on the memory area.

S208: After receiving the indication information, the second device (the device 102) maps logical address space of the virtual hard disk to memory space of the second device (the device 102), to be used as the virtual memory of the second device (the device 102).

Specifically, after receiving the indication information sent by the device 101, the device 102 determines, based on the indication information, that the virtual disk allocated by the device 101 to the device 120 is generated based on the memory area of the device 101. The device 102 may expand the memory space of the device 102 to expand one segment of virtual memory space of a same size as the virtual disk in the memory space of the device 102, and then map an address of the virtual memory space to the logical address of the virtual disk.

For example, in the step S204, the device 102 determines that the size of the virtual disk space allocated by the device 101 to the device 102 is 100 Mbytes. The device 102 expands the segment of virtual memory space whose size is 100 Mbytes in the memory space of the device 102, and maps the address of the virtual memory space whose size is 100 Mbytes to the logical address of the virtual disk.

When the second device requests the first device to allocate the memory to the second device, the first device divides a part of memory area in the memory of the first device, generates the virtual disk based on the part of memory area, and finally provides the generated virtual disk for the second device as the memory of the second device. Therefore, the second device can use the memory allocated by the first device to the second device, to improve resource utilization and an access rate of the device.

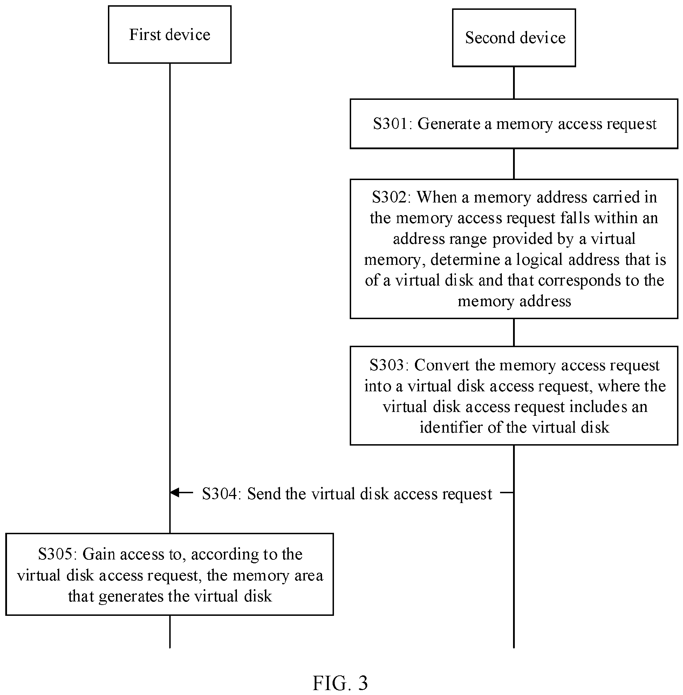

In the foregoing, the example in which the device 101 shares the resource with the device 102 is used to describe a method for sharing a memory between devices in the computer system 100. The following also describes, by using the example in which the device 101 shares the resource with the device 102, a method 300 for performing data access by the device 102 on the memory allocated by the device 101 to the device 102. FIG. 3 is a schematic flowchart of the data access method 300 according to this embodiment of this application. The method 300 includes at least the following steps.

S301: The second device (the device 102) generates a memory access request.

S302: When a memory address carried in the memory access request falls within an address range provided by the virtual memory, the second device (the device 102) determines a logical address that is of the virtual disk and that corresponds to the memory address.

S303: The second device (the device 102) converts the memory access request into a virtual disk access request, where the virtual disk access request includes the identifier of the virtual disk.

S304: The second device (the device 102) sends the virtual disk access request to the first device (the device 101). Correspondingly, the first device (the device 101) receives the virtual disk access request sent by the second device (the device 102).

S305: The first device (the device 101) gains access to, according to the virtual disk access request, the memory area that is used to generate the virtual disk.

Specifically, after the device 102 maps, to the virtual memory of the device 102, the virtual disk allocated by the device 101 to the device 102, a service in the device 102 may perform the data access on the virtual memory.

When the service in the device 102 generates the memory access request, the device 102 needs to determine whether the memory address carried in the memory access request falls within the address range of the virtual memory. When the memory address carried in the memory access request falls within the address range provided by the virtual memory, the device 102 needs to map the memory address to the logical address that is of the virtual disk and that corresponds to the memory address.

After determining the logical address that is of the virtual disk and that corresponds to the memory address carried in the memory access request, the device 102 converts the memory access request into the virtual disk access request. The virtual disk access request carries the identifier of the virtual disk and the logical address that is of the virtual disk and that corresponds to the memory address. The device 102 sends the virtual disk access request to the device 101.

After receiving the virtual disk access request, the device 101 obtains the logical address that is of the virtual disk and that is carried in the virtual disk access request, and performs the data access on space that is in the virtual disk and that corresponds to the logical address of the virtual disk.

For example, a service in the device 102 needs to perform write data access on the virtual memory of the device 102. Data that is to be written into the virtual memory and that is carried in the memory access request generated in the device 102 is 0X1223344, the memory address carried in the memory access request is byte #90, and an address length carried in the memory access request is 4 bytes.

Assuming that the address range of the corresponding virtual memory after the device 102 maps, to the virtual memory of the device 102, the virtual disk allocated by the device 101 to the device 102 is from byte #30 to byte # 1048604, the device 102 determines, based on the memory address byte#90 and the 4 byte-address length carried in the memory access request, that the memory address carried in the memory access request falls within the address range of the virtual memory.

In this case, the device 102 needs to determine the logical address that is of the virtual disk and that corresponds to the memory address byte#90 carried in the memory access request. For example, the device 102 determines that the logical address that is of the virtual disk and that corresponds to the memory address byte#90 carried in the memory access request is byte #60, the device 102 converts the memory access request into the virtual disk access request. Data carried in the virtual disk access request is 0X1223344, the address carried in the virtual disk access request is byte #60, and an address length carried in the virtual disk access request is 4 bytes. The device 102 sends the virtual disk access request to the device 101.

The device 101 receives the virtual disk access request sent by the device 102, and writes, according to the virtual disk access request, the data 0X1223344 carried in the virtual disk access request into space corresponding to a logical address from byte #60 to byte #63 in the virtual disk.

It can be learned that when the memory address carried in the memory access request generated by the device 102 falls within the address range of the virtual memory, that the service in the device 102 gains access to the virtual memory of the device 102 is actually gaining access to the memory area that is allocated by the device 101 to the device 102.

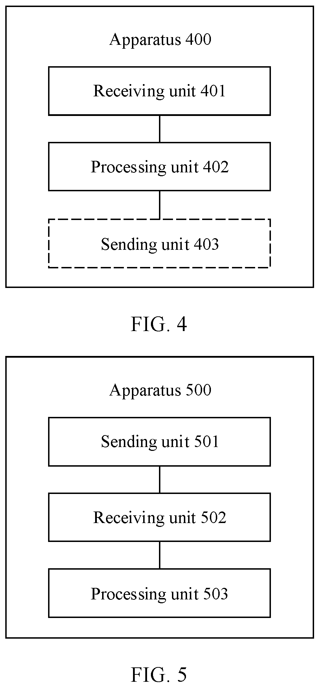

The resource management method and the data access method in the embodiments of this application are described in detail above with reference to FIG. 1 to FIG. 3. Apparatuses and devices provided in the embodiments of this application are described in detail below with reference to FIG. 4 to FIG. 6.

FIG. 4 is a schematic block diagram of an apparatus 400 according to an embodiment of this application. The apparatus 400 includes a receiving unit 401 and a processing unit 402.

The receiving unit 401 is configured to receive a request message sent by a second device. The request message is used to indicate the resource management device to allocate a memory to the second device. The request message carries a requested memory size. The resource management device and the second device communicate with each other based on a network protocol.

The processing unit 402 is configured to divide a memory area from a memory of the resource management device based on the requested memory size carried in the request message; generate a virtual disk based on the memory area; and provide the virtual disk for the second device as a memory of the second device.

Optionally, the processing unit 402 is further configured to simulate the memory area as disk space, and generate the virtual disk based on the disk space.

Optionally, the receiving unit 401 is further configured to receive a disk query command sent by the second device. The processing unit 402 is further configured to report the virtual disk to the resource management device as the memory of the resource management device.

Optionally, the receiving unit 401 is further configured to receive a disk type query command sent by the second device, where the disk type query command is used to query a type of a storage device that generates the virtual disk; and
the device 400 further includes:
a sending unit 403, configured to send indication information to the second device, where the indication information indicates that the virtual disk is generated based on the memory area.

Optionally, the receiving unit 401 is further configured to receive virtual disk access request sent by the second device, where the virtual disk access request includes an identifier of the virtual disk; and
the processing unit 402 is further configured to gain access to, according to the virtual disk access request, the memory area that is used to generate the virtual disk.

It should be understood that the apparatus 400 in this embodiment of this application may be implemented by using an application-specific integrated circuit (application-specific integrated circuit, ASIC), or may be implemented by using a programmable logic device (programmable logic device, PLD). The PLD may be a complex programmable logic device (complex programmable logical device, CPLD), a field programmable gate array (field-programmable gate array, FPGA), generic array logic (generic array logic, GAL), or any combination thereof. Alternatively, the resource management method shown in FIG. 2, or the data access method shown in FIG. 3 may be implemented by using software. When the resource management method shown in FIG. 2, or the data access method shown in FIG. 3 is implemented by using software, the apparatus 400 and modules of the apparatus 400 may also be software modules.

The apparatus 400 in this embodiment of this application may correspondingly perform the method described in the embodiments of this application. In addition, the foregoing and other operations and/or functions of the units in the apparatus 400 are used to implement the corresponding procedure performed by the first device in the method shown in FIG. 2, or the corresponding procedure performed by the first device in the method shown in FIG. 3. For brevity, details are not described herein again.

FIG. 5 is a schematic block diagram of an apparatus 500 according to an embodiment of this application. The apparatus 500 includes a sending unit 501, a receiving unit 502, and a processing unit 503.

The sending unit 501 is configured to send a request message to a first device. The request message is used to indicate the first device to allocate a memory to the resource management device. The request message carries a requested memory size. The first device and the resource management device communicate with each other based on a network protocol.

The receiving unit 502 is configured to receive a virtual disk reported by the first device. The virtual disk is generated based on a memory area in the first device.

The processing module 503 is configured to map the virtual disk to a virtual memory of the resource management device.

Optionally, the sending unit 501 is further configured to send a disk query command to the first device, and the disk query command indicates the first device to report the virtual disk.

Optionally, the sending unit 501 is further configured to send a disk type query command to the first device, where the disk type query command is used to query a type of a storage device that generates the virtual disk;
the receiving unit 502 is further configured to receive indication information sent by the first device, where the indication information is used to indicate that the virtual disk is generated based on the memory area; and
the processing unit 503 is configured to map the virtual disk to the virtual memory of the resource management device after the indication information is received.

Optionally, the processing unit 503 is further configured to generate a memory access request, when a memory address carried in the memory access request falls within an address range provided by the virtual memory, determine a logical address that is of the virtual disk and that corresponds to the memory address; and convert the memory access request into a virtual disk access request, where the virtual disk access request includes an identifier of the virtual disk; and
the sending unit 501 is further configured to send the virtual disk access request to the first device.

It should be understood that the apparatus 500 in this embodiment of this application may be implemented by using an application-specific integrated circuit (application-specific integrated circuit, ASIC), or may be implemented by using a programmable logic device (programmable logic device, PLD). The PLD may be a complex programmable logic device (complex programmable logical device, CPLD), a field programmable gate array (field-programmable gate array, FPGA), generic array logic (generic array logic, GAL), or any combination thereof. Alternatively, the resource management method shown in FIG. 2, or the data access method shown in FIG. 3 may be implemented by using software. When the resource management method shown in FIG. 2, or the data access method shown in FIG. 3 is implemented by using software, the apparatus 500 and modules of the apparatus 500 may also be software modules.

The apparatus 500 in this embodiment of this application may correspondingly perform the method described in the embodiments of this application. In addition, the foregoing and other operations and/or functions of the units in the apparatus 500 are used to implement the corresponding procedure performed by the second device in the method shown in FIG. 2, or the corresponding procedure performed by the second device in the method shown in FIG. 3. For brevity, details are not described herein again.

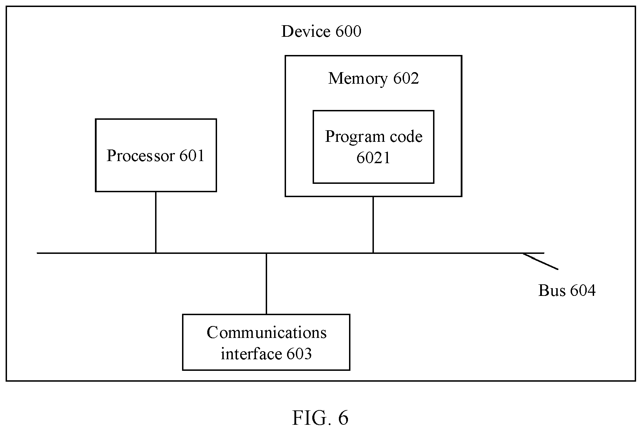

FIG. 6 is a schematic diagram of a structure of a device according to an embodiment of this application. As shown in FIG. 6, the device 600 includes a processor 601, a memory 602, a communications interface 603, and a bus 604. The processor 601, the memory 602, and the communications interface 603 may implement communication through the bus 604, or may implement communication in another manner such as wireless transmission. The memory 602 is configured to store an instruction. The processor 601 is configured to execute the instruction stored in the memory 602. The memory 602 stores program code 6021. The processor 601 may invoke the program code 6021 stored in the memory 602, to perform the resource management method shown in FIG. 2, or the data access method shown in FIG. 3.

It should be understood that in this embodiment of this application, the processor 601 may be a CPU, or the processor 601 may be another general purpose processor, a digital signal processor (DSP), an application-specific integrated circuit (ASIC), a field programmable gate array (FPGA), or another programmable logic device, a discrete gate, a transistor logic device, a discrete hardware component, or the like. The general purpose processor may be a microprocessor, any conventional processor, or the like.

The memory 602 may include a read-only memory and a random access memory, and provide an instruction and data to the processor 601. The memory 602 may further include a non-volatile random access memory. The memory 602 may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. As an example rather than a limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

The bus 604 may further include a power bus, a control bus, a status signal bus, and the like, in addition to a data bus. However, for clear description, various types of buses in FIG. 6 are marked as the bus 604.

It should be understood that the device 600 in this embodiment of this application may correspond to the apparatus 300 or the apparatus 400 in the embodiments of this application, may correspond to the first device or the second device in the method shown in FIG. 2 in the embodiments of this application, may correspond to the first device or the second device in the method shown in FIG. 3 in the embodiments of this application. When the device 600 corresponds to the first device in the method shown in FIG. 2, the foregoing and other operations and/or functions of the modules in the device 600 are respectively used to implement operation steps of the method, performed by the first device in FIG. 2. When the device 600 corresponds to the second device in the method shown in FIG. 2, the foregoing and other operations and/or functions of the modules in the device 600 are respectively used to implement operation steps of the method, performed by the second device in FIG. 2. When the device 600 corresponds to the first device in the method shown in FIG. 3, the foregoing and other operations and/or functions of the modules in the device 600 are respectively used to implement operation steps of the method, performed by the first device in FIG. 3. When the device 600 corresponds to the second device in the method shown in FIG. 3, the foregoing and other operations and/or functions of the modules in the device 600 are respectively used to implement operation steps of the method, performed by the second device in FIG. 3. For brevity, details are not described herein again.

All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server, or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of the embodiments of this application shall be subject to the protection scope of the claims.

## Claims

1. A resource management method, comprising:
receiving, by a first device, a request message sent by a second device, wherein the request message is used to indicate the first device to allocate a memory to the second device, the request message carries a size of the memory, and the first device and the second device communicate with each other based on a network protocol;
allocating, by the first device, a memory space from a memory of the first device based on the size of the memory carried in the request message;
generating, by the first device, a virtual disk based on the memory space; and
providing, by the first device, the virtual disk to the second device as a memory of the second device.

2. The method according to claim 1, wherein the generating a virtual disk based on the memory area comprises:
simulating, by the first device, the memory space as a disk space; and
generating, by the first device, the virtual disk based on the disk space.

3. The method according to claim 1 or 2, wherein the providing, by the first device, the virtual disk to the first device as a memory of the first device comprises:
receiving, by the first device, a disk query command sent by the second device; and
reporting, by the first device, the virtual disk to the first device as the memory of the first device.

4. The method according to any one of claims 1 to 3, wherein the method further comprises:
receiving, by the first device, a disk type query command sent by the second device, wherein the disk type query command is used to query a type of a storage device that generates the virtual disk; and
sending, by the first device, indication information to the second device, wherein the indication information indicates that the virtual disk is generated based on the memory space .

5. The method according to any one of claims 1 to 4, wherein the method further comprises:
receiving, by the first device, a virtual disk access request sent by the second device, wherein the virtual disk access request comprises an identifier of the virtual disk; and
access, by the first device according to the virtual disk access request, the memory space that generates the virtual disk.

6. A resource management method, comprising:
sending, by a second device, a request message to a first device, wherein the request message is used to indicate the first device to allocate a memory to the second device, the request message carries a size of the memory, and the first device and the second device communicate with each other based on a network protocol;
receiving, by the second device, a virtual disk reported by the first device, wherein the virtual disk is generated based on a memory space in the first device; and
mapping, by the second device, the virtual disk to a virtual memory of the second device.

7. The method according to claim 6, wherein the method further comprises:
sending, by the second device, a disk query command to the first device, wherein the disk query command is for indicating the first device to report the virtual disk.

8. The method according to claim 6 or 7, wherein the method further comprises:
sending, by the second device, a disk type query command to the first device, wherein the disk type query command is used to query a type of a storage device that generates the virtual disk;
receiving, by the second device, indication information sent by the first device, wherein the indication information is used to indicate that the virtual disk is generated based on the memory space; and
mapping, by the second device, the virtual disk to the virtual memory of the second device after receiving the indication information.

9. The method according to any one of claims 6 to 8, wherein the method further comprises:
generating, by the second device, a memory access request;
when a memory address carried in the memory access request falls within an address range provided by the virtual memory, determining, by the second devicein the virtual disk, a logical address corresponding to the memory address;
converting, by the second device, the memory access request into the virtual disk access request, wherein the virtual disk access request comprises an identifier of the virtual disk; and
sending, by the second device, the virtual disk access request to the first device.

10. A resource management apparatus, comprising:
a receiving unit, configured to receive a request message sent by a second device, wherein the request message is used to indicate the resource management apparatus to allocate a memory to the second device, the request message carries a size of the memory, and the resource management apparatus and the second device communicate with each other based on a network protocol;
a processing unit, configured to: allocate a memory space from a memory of the resource management apparatus based on the size of the memory carried in the request message; generate a virtual disk based on the memory space; and provide the virtual disk for the second device as a memory of the second device.

11. The apparatus according to claim 10, wherein the processing unit is further configured to simulate the memory space as disk space; and generate the virtual disk based on the disk space.

12. The apparatus according to claim 10 or 11, wherein the receiving unit is further configured to receive a disk query command sent by the second device; and
the processing unit is further configured to report the virtual disk to the resource management apparatus as a memory of the resource management apparatus.

13. The apparatus according to any one of claims 10 to 12, wherein the receiving unit is further configured to receive a disk type query command sent by the second device, the disk type query command is used to query a type of a storage device that generates the virtual disk, and
the apparatus further comprises:
a sending unit, configured to send indication information to the second device, wherein the indication information indicates that the virtual disk is generated based on the memory space.

14. The apparatus according to any one of claims 10 to 13, wherein the receiving unit is further configured to receive a virtual disk access request sent by the second device, the virtual disk access request comprises an identifier of the virtual disk, and
the processing unit is further configured to access to, according to the virtual disk access request, the memory space that is used to generate the virtual disk.

15. A resource management apparatus, comprising:
a sending module, configured to send a request message to a first device, wherein the request message is used to indicate the first device to allocate a memory to the resource management apparatus, the request message carries a size of the memory, and the first device and the resource management apparatus communicate with each other based on a network protocol;
a receiving module, configured to receive a virtual disk reported by the first device, wherein the virtual disk is generated based on a memory space in the first device; and
a processing module, configured to map the virtual disk to a virtual memory of the resource management apparatus.

16. The apparatus according to claim 15, wherein the sending module is further configured to send a disk query command to the first device, and the disk query command indicates the first device to report the virtual disk.

17. The apparatus according to claim 15 or 16, wherein the sending module is further configured to send a disk type query command to the first device, wherein the disk type query command is used to query a type of a storage device that generates the virtual disk;
the receiving module is further configured to receive indication information sent by the first device, and the indication information is used to indicate that the virtual disk is generated based on the memory space; and
the processing module is configured to map the virtual disk to the virtual memory of the resource management apparatus after the indication information is received.

18. The apparatus according to any one of claims 15 to 17, wherein the processing module is further configured to: generate a memory access request; when a memory address carried in the memory access request falls within an address range provided by the virtual memory, determine, in the virtual disk, a logical address corresponding to the memory address; and convert the memory access request into the virtual disk access request, and the virtual disk access request comprises an identifier of the virtual disk; and
the sending module is further configured to send the virtual disk access request to the first device.
